Europäisches Patentamt

European Patent Office

Office européen des brevets

(11) Veröffentlichungsnummer: **0 638 516 A1**

## (12) EUROPÄISCHE PATENTANMELDUNG

(21) Anmeldenummer: **94110929.0**

(51) Int. Cl.6: **C01B 25/238**

(22) Anmeldetag: **14.07.94**

(30) Priorität: **14.08.93 DE 4327401**

(43) Veröffentlichungstag der Anmeldung:
**15.02.95 Patentblatt 95/07**

(84) Benannte Vertragsstaaten:
**BE DE FR GB IT NL**

(71) Anmelder: **HOECHST AKTIENGESELLSCHAFT**

**D-65926 Frankfurt (DE)**

(72) Erfinder: **Vermaire, Dirk Cornelis, Dr.**
**van Kleffenlaan 161**
**NL-4334 HE Middelburg (NL)**
Erfinder: **Damman, Bernardus Johannes**
**Oude Vlissingseweg 63**
**NL-4336 AB Middelburg (NL)**
Erfinder: **Bennoit, Horst**
**Klausenerstrasse 90**
**D-66333 Völklingen (DE)**

(54) **Verfahren zur Entfernung von Blei und Cadmium aus Phosphorsäure.**

(57) Zur Entfernung von Blei und Cadmium aus Phosphorsäure trägt man in eine Phosphorsäure mit einem $P_2O_5$-Gehalt von bis zu 32 Gewichts%, einem Eisengehalt von bis zu 0,3 Gewichts% und einem Alkali/P-Verhältnis von bis zu 0,30 gleichzeitig Alkalilauge und wäßrige Sulfid-Lösung unter Durchmischung ein. Die Temperatur der mit Alkalilauge und Sulfidlösung durchmischten Phosphorsäure stellt man unter Entweichen des überschüssigen Schwefelwasserstoffes auf Temperaturen von 58 bis 72°C ein. Zur Vervollständigung der Sulfidfällung senkt man die Temperatur auf unter 45°C ab. Schließlich trennt man die ausgefällten Sulfide des Bleis und Cadmiums von der Phosphorsäure ab.

EP 0 638 516 A1

Die vorliegende Erfindung betrifft ein Verfahren zum Entfernen von Blei und Cadmium aus Phosphorsäure, insbesondere aus solcher Phosphorsäure, welche beim Aufschluß von Stäuben anfällt, die im Elektroabscheider bei der Herstellung von gelbem Phosphor im elektrothermischen Reduktionsofen abgetrennt wurden.

Aus der nichtvorveröffentlichten deutschen Patentanmeldung P 42 30 223.4 ist ein Verfahren zum Entfernen von Blei, Cadmium und Zink aus Stäuben von der elektrothermischen Herstellung von gelbem Phosphor bekannt, bei welchem die Stäube zunächst mit mindestens 25 gewichts-%iger Phosphorsäure bei oberhalb 60°C in einer belüfteten Reaktionszone aufgeschlossen werden. Anschließend wird die Aufschlußlösung in einen blei-, cadmium- und zinkfreien Rückstand und in eine Blei, Cadmium und Zink gelöst enthaltende Phosphorsäure aufgetrennt.

Es ist Aufgabe der vorliegenden Erfindung, ein Verfahren zur Entfernung von Blei und Cadmium aus Phosphorsäure anzugeben, welche neben diesen Metallen noch Zink und Eisen gelöst enthält. Das wird erfindungsgemäß dadurch erreicht, daß man in Phosphorsäure mit einem $P_2O_5$-Gehalt von bis zu 32 Gewichts%, einem Eisengehalt von bis zu 0,3 Gewichts% und einem Alkali/P-Verhältnis von bis zu 0,30 gleichzeitig Alkalilauge und wäßrige Sulfid-Lösung unter Durchmischung einträgt; daß man die Temperatur der mit Alkalilauge und Sulfid-Lösung durchmischten Phosphorsäure unter Entweichen des überschüssigen Schwefelwasserstoffes auf Temperaturen von 58 bis 72°C einstellt; daß man zur Vervollständigung der Sulfidfällung die Temperatur auf unter 45°C absenkt und daß man schließlich die ausgefällten Sulfide des Bleis und Cadmiums von der Phosphorsäure abtrennt.

Das Verfahren gemäß der Erfindung kann weiterhin wahlweise auch noch dadurch ausgestaltet sein, daß

a) man der Phosphorsäure zunächst ein Reduktionsmittel zusetzt;
b) als Reduktionsmittel nullwertiges Eisen dient;
c) die Alkalilauge eine Konzentration von bis zu 50 Gewichts% aufweist;
d) die Sulfid-Lösung 2 bis 8 Gewichts%, vorzugsweise 4 bis 6 Gewichts%, Sulfid enthält;
e) der Eintrag von Alkalilauge und Sulfidlösung getrennt und gleichzeitig unterhalb der Flüssigkeitsoberfläche der Phosphorsäure erfolgt;
f) das Alkali/P-Verhältnis bei der Sulfidfällung 0,40 bis 0,65, vorzugsweise 0,45 bis 0,55, beträgt;
g) Sulfid gemäß der Formel dosiert wird:

$$S\text{-}Dos = \frac{[S^{2-}]}{[Pb^{2+}] + [Cd^{2+}]}$$

wobei S-Dos mindestens 3 ist;
h) die Abtrennung der ausgefällten Sulfide nach Zusatz eines Flockungsmittels vorgenommen wird;
i) die Abtrennung der Sulfide unter Verwendung eines Zentrifugalseparators erfolgt.

Da ein kleiner Anteil des in der Phosphorsäure enthaltenen Bleis radioaktiv sein kann (Blei 210 und Abkömmlinge aus dem Rohphosphat), ist seine vollständige Entfernung in möglichst konzentrierter Form erforderlich, d.h. der Bleisulfid-Niederschlag sollte neben dem unvermeidlich mit ausfallenden Cadmiumsulfid möglichst wenig Zinksulfid (weniger als 1o Gewichts%) und möglichst keinen elementaren Schwefel enthalten.

Beim erfindungsgemäßen Verfahren wird die Mitfällung von Zinksulfid einerseits durch die Fällung im sauren Bereich (Alkali/P-Verhältnis von etwa 0,5) und andererseits durch die niedrige Sulfidionenkonzentration in der Phosphorsäure bei der Fällung im Temperaturbereich unter 45°C erfolgreich verringert.

Beim Verfahren gemäß der Erfindung kann das in der Phosphorsäure enthaltene dreiwertige Eisen durch Zusatz eines Reduktionsmittels, beispielsweise von metallischem Eisen oder Ferrophosphor, in zweiwertiges Eisen überführt werden. Dadurch kann verhindert werden, daß dreiwertiges Eisen Sulfidionen zu Schwefel oxidiert.

Durch den gleichzeitigen Eintrag von Alkalilauge und Sulfid-Lösung in die Phosphorsäure beim erfindungsgemäßen Verfahren wird verhindert, daß beim Anstieg des Alkali/P-Verhältnisses Bleimonohydrogenphosphat ($PbHPO_4$) ausfällt.

Beim Verfahren gemäß der Erfindung wird der Bleigehalt der Phosphorsäure auf unter 5 ppm herabgesetzt, während im Filterkuchen das Blei, welches teilweise in radioaktiver Form vorliegt, im Konzentrationsbereich über 40 % angereichert ist.

Beim Verfahren gemäß der Erfindung wird der überschüssige Schwefelwasserstoff bei Temperaturen bis zu 75 °C ausgeblasen.

Beim erfindungsgemäßen Verfahren gibt das Alkali/P-Verhältnis den Neutralisationsgrad der Phosphorsäure an (Mol Alkali pro Mol vorliegender Phosphorsäure). Das Alkali/P-Verhältnis ist bei hohen Säure- und Salzkonzentrationen eine geeignete Alternative zur pH-Messung. Dabei wird das Alkali/P-Verhältnis einer Lösung mit Alkali/P < 1 dadurch ermittelt, daß man die Lösung nach Verdünnen mit Wasser mit eingestellter Alkalilauge bis zu den Umschlagpunkten des molaren Verhältnisses Alkali/P = 1 (pH 4,5) bzw. Alkali/P = 2 (pH 9,5) titriert und die verbrauchten Laugemengen in die Formel

$$\text{Alkali/P} = 1 - \frac{\text{Laugenverbrauch bis pH 4,5}}{\text{Laugenverbrauch zwischen pH 4,5 und pH 9,5}}$$

einsetzt.

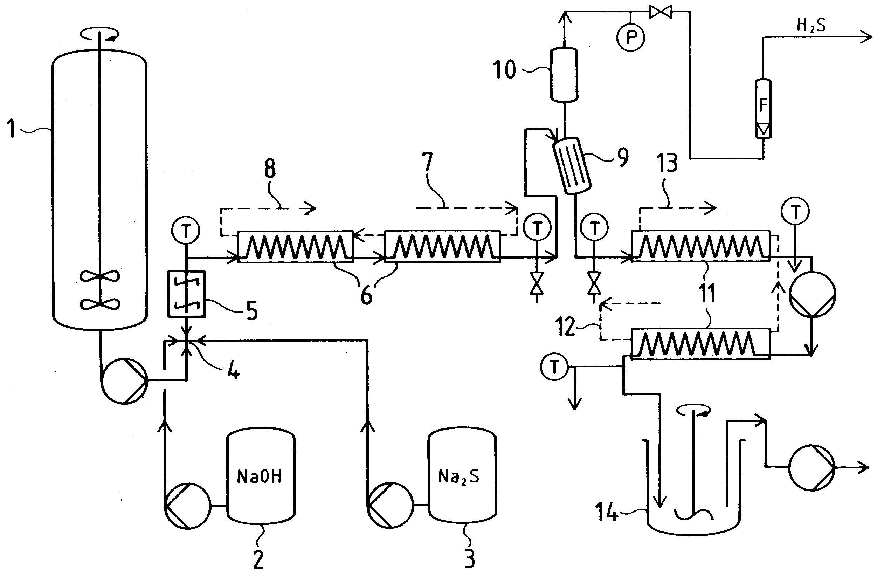

Das erfindungsgemäße Verfahren kann in einer Anlage durchgeführt werden, welche in der beigefügten Figur schematisch dargestellt ist:

In der Vorlage 1 befindet sich Phosphorsäure, in der u.a. Blei, Cadmium, Zink und Eisen gelöst sind. Ein Natronlaugetank 2, ein Behälter 3 für Sulfid-Lösung und die Vorlage 1 sind strömungsmäßig über ein Vierwegeventil 4 mit einem statischen Mischer 5 verbunden. Die aus dem statischen Mischer 5 austretende Mischung gelangt in das erste Kühlerpaar 6 mit Kühlmittelzuführung 7 und Kühlmittelableitung 8. Das Kühlerpaar 6 ist strömungsmäßig mit einem Entgasungsgefäß 9 verbunden, welches seinerseits mit einem Schaumbrecher 10 in Verbindung steht. Der Ablauf aus dem Entgasungsgefäß 9 gelangt in ein zweites Kühlerpaar 11, welches mit einer Kühlmittelzuführung 12 und mit einer Kühlmittelableitung 13 versehen ist. Aus dem zweiten Kühlerpaar 11 läuft die Bleisulfid und Cadmiumsulfid enthaltende Phosphorsäure in ein mit Rührwerk versehenes Sammelgefäß 14, aus welchem die Suspension zu einem Filter gepumpt wird.

Beispiel 1 (Vergleichsbeispiel)

Aus der Vorlage 1 (vergl. die Figur) wurden 47,4 l/h Phosphorsäure, welche

32,9 Gewichts% $P_2O_5$
511 ppm Pb
212 ppm Cd
2386 ppm Zn enthielt und ein
Na/P-Verhältnis von 0,37

aufwies, gemeinsam mit 1,8 l/h 50 gewichts%iger Natronlauge und 1,2 l/h 5 gewichts%iger Natriumsulfid-Lösung (S-Dos = 2,7) dem statischen Mischer 5 zugeführt. Die resultierende Mischung wurde mit einer Temperatur von 73 °C in das erste Kühlerpaar 6 eingeleitet, an dessen Ausgang die Mischung eine Temperatur von 68 °C aufwies. Nach Passieren des Entgasungsgefäßes 9 wurde die Mischung mit einer Temperatur von 67 °C durch das zweite Kühlerpaar 11 geleitet, welches sie mit einer Temperatur von 43 °C verließ. Die aus dem Sammelgefäß 14 entnommene Mischung wurde filtriert.

Das Filtrat enthielt

30,9 % $P_2O_5$
12,3 ppm Pb
0,5 ppm Cd
2039 ppm Zn

und wies ein Na/P-Verhältnis von 0,52 auf.

Der Filterkuchen enthielt:

38,8 % Pb
18,6 % Cd
7,4 % Zn
0,14 % Fe
31 % Gesamt-S
(davon 14,9 % Sulfid-S)
3,2 % $P_2O_5$

Beispiel 2 (Vergleichsbeispiel)

Aus der Vorlage 1 (vergl. die Figur) wurden 48,0 l/h Phosphorsäure, welche

30,5 Gewichts% $P_2O_5$
488 ppm Pb

188 ppm Cd

2360 ppm Zn

enthielt und ein Na/P-Verhältnis von 0,37 aufwies, gemeinsam mit 2,3 l/h 50 gewichts%iger Natronlauge und 2,1 l/h 5 gewichts%iger Natriumsulfid-Lösung (S-Dos = 5,0) dem statischen Mischer 5 zugeführt. Die resultierende Mischung wurde mit einer Temperatur von 73°C in das erste Kühlerpaar 6 eingeleitet, an dessen Ausgang die Mischung eine Temperatur von 58°C aufwies. Nach Passieren des Entgasungsgefäßes 9 wurde die Mischung mit einer Temperatur von 56°C durch das zweite Kühlerpaar 11 geleitet, welches sie mit einer Temperatur von 38°C verließ. Die aus dem Sammelgefäß 14 entnomene Mischung wurde filtriert.

Das Filtrat enthielt

28,7 % $P_2O_5$

1,7 ppm Pb

0,0 ppm Cd

2086 ppm Zn

und wies ein Na/P-Verhältnis von 0,47 auf.

Der Filterkuchen enthielt:

38,3 % Pb

12,0 % Cd

13,9 % Zn

0,14 % Fe

31,7 % Gesamt-S

(davon 16,2 % Sulfid-S)

2,2 % $P_2O_5$.

Beispiel 3 (Vergleichsbeispiel)

Aus der Vorlage 1 (vergl. die Figur) wurden 41,5 l/h Phosphorsäure, welche

29,2 Gewichts% $P_2O_5$

584 ppm Pb

182 ppm Cd

2780 ppm Zn

enthielt und ein Na/P-Verhältnis von 0,30 aufwies, gemeinsam mit 2,9 l/h 50 gewichts%iger Natronlauge und 1,3 l/h 5 gewichts%iger Natriumsulfid-Lösung (S-Dos = 3,0) dem statischen Mischer 5 zugeführt. Die resultierende Mischung wurde mit einer Temperatur von 78°C in das erste Kühlerpaar 6 eingeleitet, an dessen Ausgang die Mischung eine Temperatur von 69°C aufwies. Nach Passieren des Entgasungsgefäßes 9 wurde die Mischung mit einer Temperatur von 64°C durch das zweite Kühlerpaar 11 geleitet, welches sie mit einer Temperatur von 39°C verließ. Die aus dem Sammelgefäß 14 entnommene Mischung wurde filtriert.

Das Filtrat enthielt

27,2 % $P_2O_5$

1,8 ppm Pb

0,5 ppm Cd

2185 ppm Zn

und wies ein Na/P-Verhältnis von 0,60 auf.

Der Filterkuchen enthielt:

39,2 % Pb

12,4 % Cd

27,8 % Zn

0,25 % Fe

23,2 % Gesamt-S

(davon 16,7 % Sulfid-S)

1,8 % $P_2O_5$.

Beispiel 4 (gemäß der Erfindung)

Aus der Vorlage 1 (vergl. die Figur) wurden 49,3 l/h der in Beispiel 2 eingesetzten Phosphorsäure gemeinsam mit 3,7 l/h 50 gewichts%iger Natronlauge und 1,3 l/h 5 gewichts%iger Natriumsulfid-Lösung (S-Dos = 3,1) dem statischen Mischer 5 zugeführt. Die resultierende Mischung wurde mit einer Temperatur von 85°C in das erste Kühlerpaar 6 eingeleitet, an dessen Ausgang die Mischung eine Temperatur von 60°C aufwies. Nach Passieren des Entgasungsgefäßes 9 wurde die Mischung mit einer Temperatur von 58°C durch das zweite Kühlerpaar 11 geleitet, welches sie mit einer Temperatur von 37°C verließ. Die aus dem Sammelgefäß 14 entnommene Mischung wurde filtriert.

Das Filtrat enthielt

27,6 % $P_2O_5$

4 ppm Pb

0,4 ppm Cd

2185 ppm Zn

und wies ein Na/P-Verhältnis von 0,60 auf.

Der Filterkuchen enthielt:

48,2 % Pb

15,3 % Cd

4,7 % Zn

0,1 % Fe

29,2 % Gesamt-S

(davon 14,1 % Sulfid-S)

1,9 % $P_2O_5$

Beispiel 5 (gemäß der Erfindung)

In die Vorlage 1 (vergl. die Figur), in welcher sich die in Beispiel 2 eingesetzte Phosphorsäure befand, wurden 0,15 Gewichts-% feine Eisenspäne eingetragen, welche nach einstündigem Rühren unter vollständiger Reduktion des in der Phosphorsäure enthaltenen dreiwertigen Eisens vollständig aufgelöst waren.

Von dieser so behandelten Phosphorsäure wurden 49,3 l/h gemeinsam mit 3,1 l/h 50 gewichts%iger Natronlauge und 0,45 l/h 5 gewichts%iger Natriumsulfid-Lösung (S-Dos = 3,1) dem statischen Mischer 5 zugeführt. Die resultierende Mischung wurde mit einer Temperatur von 82 °C in das erste Kühlerpaar 6 eingeleitet, an dessen Ausgang die Mischung eine Temperatur von 59 °C aufwies. Nach Passieren des Entgasungsgefäßes 9 wurde die Mischung mit einer Temperatur von 58 °C durch das zweite Kühlerpaar 11 geleitet, welches sie mit einer Temperatur von 36 °C verließ. Die aus dem Sammelgefäß 14 entnommene Mischung wurde filtriert.

Das Filtrat enthielt

28,7 % $P_2O_5$

3,6 ppm Pb

0 ppm Cd

2006 ppm Zn

und wies ein Na/P-Verhältnis von 0,55 auf.

Der Filterkuchen enthielt:

53,4 % Pb

17,3 % Cd

7,6 % Zn

18,1 % Gesamt-S

(davon 16,9 % Sulfid-S)

1,5 % $P_2O_5$

Beispiel 6 (gemäß der Erfindung)

Aus der Vorlage 1 (vergl. die Figur) wurden 51 l/h der nach Beispiel 5 mit Eisenspänen reduktiv behandelten Phosphorsäure gemeinsam mit 3,1 l/h 50 gewichts%iger Natronlauge und 0,45 l/h 5 gewichts%iger Sulfid-Lösung (S-Dos = 3,0) dem statischen Mischer 5 zugeführt. Die resultierende Mischung wurde mit einer Temperatur von 83 °C in das erste Kühlerpaar 6 eingeleitet, an dessen Ausgang die Mischung eine Temperatur von 60 °C aufwies. Nach Passieren des Entgasungsgefäßes 9 wurde die Mischung mit einer Temperatur von 59 °C durch das zweite Kühlerpaar 11 geleitet, welches sie mit einer Temperatur von 34 °C verließ. Die aus dem Sammelgefäß 14 entnommene Mischung wurde filtriert.

Das Filtrat enthielt

28,3 % $P_2O_5$

3,3 ppm Pb

0,14 ppm Cd

2138 ppm Zn
und wies ein Na/P-Verhältnis von 0,55 auf.
Der Filterkuchen enthielt:

49,3 % Pb

22,5 % Cd

5,9 % Zn

17,3 % Gesamt-S

(davon 17,0 % Sulfid-S)

4,6 % $P_2O_5$

**Patentansprüche**

1. Verfahren zur Entfernung von Blei und Cadmium aus Phosphorsäure, dadurch gekennzeichnet, daß man in Phosphorsäure mit einem $P_2O_5$-Gehalt von bis zu 32 Gewichts%, einem Eisengehalt von bis zu 0,3 Gewichts% und einem Alkali/P-Verhältnis von bis zu 0,30 gleichzeitig Alkalilauge und wäßrige Sulfid-Lösung unter Durchmischung einträgt; daß man die Temperatur der mit Alkalilauge und Sulfidlösung durchmischten Phosphorsäure unter Entweichen des überschüssigen Schwefelwasserstoffes auf Temperaturen von 58 bis 72°C einstellt; daß man zur Vervollständigung der Sulfidfällung die Temperatur auf unter 45°C absenkt und daß man schließlich die ausgefällten Sulfide des Bleis und Cadmiums von der Phosphorsäure abtrennt.

2. Verfahren nach Anspruch 1, dadurch gekennzeichnet, daß man der Phosphorsäure zunächst ein Reduktionsmittel zusetzt.

3. Verfahren nach Anspruch 2, dadurch gekennzeichnet, daß als Reduktionsmittel nullwertiges Eisen dient.

4. Verfahren nach mindestens einem der Ansprüche 1 bis 3, dadurch gekennzeichnet, daß die Alkalilauge eine Konzentration von bis zu 50 Gewichts% aufweist.

5. Verfahren nach mindestens einem der Ansprüche 1 bis 4, dadurch gekennzeichnet, daß die Sulfid-Lösung 2 bis 8 Gewichts%, vorzugsweise 4 bis 6 Gewichts%, Sulfid enthält.

6. Verfahren nach mindestens einem der Ansprüche 1 bis 5, dadurch gekennzeichnet, daß der Eintrag von Alkalilauge und Sulfid-Lösung getrennt und gleichzeitig unterhalb der Flüssigkeitsoberfläche der Phosphorsäure erfolgt.

7. Verfahren nach mindestens einem der Ansprüche 1 bis 6, dadurch gekennzeichnet, daß das Alkali/P-Verhältnis bei der Sulfidfällung 0,40 bis 0,65, vorzugsweise 0,45 bis 0,55, beträgt.

8. Verfahren nach mindestens einem der Ansprüche 1 bis 7, dadurch gekennzeichnet, daß das Sulfid gemäß der Formel dosiert wird:

$$S\text{-}Dos = \frac{[S^{2-}]}{[Pb^{2+}] + [Cd^{2+}]}$$

wobei S-Dos mindestens 3 ist.

9. Verfahren nach mindestens einem der Ansprüche 1 bis 8, dadurch gekennzeichnet, daß die Abtrennung der ausgefällten Sulfide nach Zusatz eines Flockungsmittels vorgenommen wird.,

10. Verfahren nach Anspruch 9, dadurch gekennzeichnet, daß die Abtrennung der Sulfide unter Verwendung eines Zentrifugalseparators erfolgt.

EP 0 638 516 A1

Europäisches
Patentamt

**EUROPÄISCHER RECHERCHENBERICHT**

Nummer der Anmeldung

EP 94 11 0929

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | CS-B-275 029 (TEREN JAN) 15. Januar 1992 & CHEMICAL ABSTRACTS, vol. 120, no. 26, 27. Juni 1994, Columbus, Ohio, US; abstract no. 326859, TEREN JAN & AL. 'Removal of heavy metals especially cadmium, lead and mercury from extractive phosphoric acid' * Zusammenfassung * --- | 1,4,5,10 | C01B25/238 |
| A | EP-A-0 023 195 (BOLIDEN AKTIEBOLAG) * Ansprüche 1,3,5 * * Beispiele 1,4,6,9b * --- | 1,4,5,7 | |
| A | DATABASE WPI Section Ch, Week 7832, Derwent Publications Ltd., London, GB; Class C04, AN 78-57518A & JP-A-53 075 196 (CENTRAL GLASS KK) 4. Juli 1978 * Zusammenfassung * --- | 1 | |
| A | EP-A-0 164 087 (BASF AKTIENGESELLSCHAFT) * Ansprüche 1,4 * * Seite 3, Zeile 42 - Seite 4, Zeile 13 * ----- | 1,9 | RECHERCHIERTE SACHGEBIETE (Int.Cl.6) C01B |

Der vorliegende Recherchenbericht wurde für alle Patentansprüche erstellt

| Recherchenort | Abschlußdatum der Recherche | Prüfer |
|---|---|---|
| DEN HAAG | 24. November 1994 | Rigondaud, B |